# EUROPÄISCHE PATENTSCHRIFT

(11) **EP 1 843 394 B1**
(45) Veröffentlichungstag und Bekanntmachung des Hinweises auf die Patenterteilung: **27.03.2019**
(21) Anmeldenummer: 07001222.4
(22) Anmeldetag: 20.01.2007
(51) Int. Cl.: H01L 25/075, H01L 25/16, A61C 13/15, A61C 19/00, H01L 33/60, H01L 33/62, H01L 33/64

(54) **HALBLEITER-STRAHLUNGSQUELLE UND LICHTHÄRTGERÄT MIT DIESER**
SEMICONDUCTOR LIGHT SOURCE AND LIGHT CURING APPARATUS WITH THE SAME
SOURCE SEMI-CONDUCTRICE DE RAYONNEMENT ET APPAREIL DE PHOTODURCISSEMENT L'INCORPORANT

(30) Priorität: 03.04.2006 DE 102006015335
(43) Veröffentlichungstag der Anmeldung: 10.10.2007
(73) Patentinhaber: Ivoclar Vivadent AG, 9494 Schaan (LI)
(72) Erfinder: Plank, Wolfgang, A-6830 Rankweil (AT); Senn, Bruno, CH-9470 Buchs (CH)
(74) Vertreter: Baronetzky, Klaus

(56) Entgegenhaltungen:
- EP-A- 0 509 389
- EP-A- 0 802 572
- WO-A-2005/067063
- DE-A1-102005 028 176
- US-A1- 2002 177 099
- US-A1- 2004 218 390
- US-A1- 2005 002 191
- US-A1- 2005 152 146
- US-A1- 2006 012 988
- US-B2- 6 930 332

## Beschreibung

Die Erfindung betrifft eine Halbleiter-Strahlungsquelle, gemäß dem Oberbegriff von Anspruch 1, sowie ein Lichthärtgerät, gemäß dem Obergriff von Anspruch 28.

Derartige Halbleiter-Strahlungsquellen sind seit langem bekannt. Sie können Leuchtdioden oder LEDs aufweisen, deren Emissionsspektrum sich durch entsprechende Auswahl der LEDs an die Erfordernisse hinsichtlich des Empfindlichkeitsspektrums der zu härtenden Materialien anpassen lässt.

Lichthärtgeräte müssen kalibriert werden, wie es beispielsweise bereits aus der DE 198 10 573 A1 bekannt ist. Andererseits ist es auch bereits bekannt geworden, zu einander parallel geschaltete Leuchtdioden über Vorwiderstände zu kalibrieren, wozu beispielsweise auf die DE 100 37 420 A1 zu verweisen ist. Bei dieser Lösung sind die LED-Chips in einer Art Matrix angeordnet, und durch Lasertrimmen lassen sich die je zugeordneten Vorwiderstände abgleichen.

Bei der Realisierung von Lichthärtgeräten ist es wünschenswert, eine besonders hohe Lichtemission punktgenau bereitzustellen, um die Durchhärtung rasch und in der gewünschten Qualität bereitzustellen. Hierzu ist es bekannt geworden, Leuchtdioden eng benachbart zusammenzufassen und das von den Leuchtdioden abgegebene Licht über geeignete optische Maßnahmen wie eine Sammellinse zu bündeln.

Dies wirft andererseits gerade bei Leuchtdioden und LED-Chips hoher Leistung das Problem der ausreichenden Kühlung auf. Eine ausreichende Kühlung lässt sich praktisch nur dadurch bereitstellen, dass die LED-Chips unmittelbar auf einem Basiskörper als Kühlkörper aufgebracht sind, der intensiv für die Wärmeableitung vorbereitet ist.

Dennoch wird die Umgebung der LED-Chips recht heiss, so dass beispielsweise auch dafür Sorge getragen werden muss, dass sich die meist aus Kunststoff bestehende Sammellinse nicht versehentlich verformt.

Widerstände bestehen häufig aus einem schichtförmigen Trägermaterial mit Graphiteinlagerungen. Durch die Wahl der Dicke und der weiteren Abmessungen der Widerstandsschicht lässt sich der erwünschte Widerstand in weiten Bereichen einstellen; durch Wahl der Mischung, die für die Widerstandsbahn- oder schicht bereitgestellt wird, kann man den Widerstandswert in nahezu beliebiger Grössenordnung (vom mΩ-Bereich bis zum TΩ-Bereich) wählen.

Es ist bereits vorgeschlagen worden, die LED-Chips in dichter. Packung zentral auf einem Kühlkörper anzuordnen und Widerstandsschichten ausserhalb dieses Bereichs anzuordnen. Durch Lasertrimmen der Widerstände hat man versucht, die Leistung der einzelnen LED-Chips aneinander anzunähern. Im Betrieb zeigen derartige LED-Chips häufig dennoch eine ungleiche Leistungsverteilung, was unbefriedigend ist und auch durch mehrfaches Nachjustieren nicht recht zu beseitigen war.

Die Druckschrift US 6,930,332 B2 offenbart eine Lichtemissionsvorrichtung mit einem verbesserten Wirkungsgrad. Die Lichtemissionsvorrichtung weist eine Metallplatte und eine gedruckte Schaltung auf, die auf die Metallplatte aufgesetzt ist. In der gedruckten Schaltung sind Einschublöcher angeordnet, durch die Erhöhungen der
Metallplatte hindurchtreten. Auf den Erhöhungen sind LEDs angeordnet. Durch die erhöhte Lagerung der LEDs wird weniger Licht an die Wandbereiche der

Einschublöcher abgestrahlt, so dass der Wirkungsgrad insgesamt erhöht wird. Elektronische Bauteile können an der Rückseite (lead-mount) oder an der Vorderseite (surface-mount) der gedruckten Schaltung angeordnet werden, damit diese nicht in den Strahlengang der LEDs hineinragen.

Die Druckschrift EP 0 802 572 A2 offenbart ein Beleuchtungselement zur Erzeugung von Leuchtsignalen. Es weist einen Basiskörper auf, der von einer Kontaktbahn umhüllt ist. Die Kontaktbahn verbindet einen ersten Anschluss mit einem LED-Chip. Dieser wird von der Kontaktbahn weiter mit einem Vorwiderstand verbunden. Weiter verbindet die Kontaktbahn einen zweiten Anschluss mit dem Vorwiderstand.

Die Druckschrift US 2006/0012988 A1 offenbart eine LED zum Ausgeben von beliebig gefärbten Licht. Dazu wird das abgegebene Licht dreier Einzeldioden gemischt, wobei die Einzeldioden rotes, grünes und blaues Licht abgeben. Über einstellbare Vorwiderstände kann die Intensität der Lichtabgabe jeder einzelnen Einzeldiode individuell eingestellt werden.

Die Druckschrift US 2005/0002191 A1 offenbart eine Glühbirne aus LEDs. Die LEDs sind auf einem Substrat angebracht, welches die LEDs über einen Kühlkörper kühlt. Die LEDs sind auch mit abgleichbaren Vorwiderständen verbunden.

Die Druckschrift DE 10 2005 028 176 A1 offenbart eine Leuchtdiode vom Typ mit einer hohen Leuchtkraft. Zur Verbesserung der Wärmeabfuhr wird durch eine auf einem Wärmeleitkörper gelagerten Platine ein Durchgangsloch geführt. In diesem Durchgangsloch ist ein Diodenkörper angeordnet, der direkt mit dem Wärmeleitkörper verbunden ist. Der Diodenkörper wird mittels Bonddrähten mit der Platine verbunden.

Die Druckschrift US 2004/0218390 A1 offenbart eine Beleuchtungsvorrichtung die Licht aus LEDs mit einer Multireflektionsschicht aus einer ersten Prismaschicht und einer zweiten Prismaschicht homogenisiert.

Die Druckschrift EP 0 509 389 A2 offenbart eine Leuchtdiode, mit einer verminderten Abgabe von Streulicht.

Die Druckschrift WO 2005/067063 A1 offenbart eine Beleuchtungsvorrichtung mit einer Leuchtdiode, die auf ihre Anschlussverbindungen aufgelötet ist.

Die Druckschrift US 2005/0152146 A1 offenbart eine Lichtquelle mit einer Vielzahl von LED-Chips, die auf einem Substrat getragen werden. Das Substrat ist wärmeleitfähig und elektrisch isolierend. Auf dem Substrat sind ferner Zuleitungen für die LED-Chips sowie ein abgleichbarer Vorwiderstand vorgesehen.

Die Druckschrift US 2002/0177099 A1 offenbart ein Lichhärtgerät mit einer LED, die in einer Vertiefung eines Substratkörpers aufgenommen ist. Am Rand der Vertiefung befinden sich Kontaktpunkte mit denen die LED über eine Bondverbindung elektrisch verbunden wird.

Daher ist es Aufgabe der Erfindung, eine Halbleiter-Strahlungsquelle gemäss dem Anspruch 1 sowie ein Lichthärtgerät gemäss dem Anspruch 28 bereitzustellen, das eine gleichmässige und bessere Lichtausbeute auch langzeitstabil bereitstellt.

Diese Aufgabe wird erfindungsgemäss durch die Ansprüche 1 bzw. 28 gelöst. Vorteilhafte Weiterbildungen ergeben sich aus den Unteransprüchen.

Die erfindungsgemäße Maßnahme, die Vorwiderstände für die LED-Chips auf einer Printplatte anzuordnen, ergibt überraschend ein weit verbessertes Kalibrierergebnis. Offenbar ist es für die Genauigkeit der Kalibrierung wichtig, dass die Vorwiderstände nicht zu großen Temperaturschwankungen unterworfen sind, zumal Kohleschichtwiderstände einen negativen Temperaturkoeffizienten aufweisen, d.h., dass der Widerstandswert von Widerstandsschichten, die klein sein sollen, durch Erwärmung noch kleiner und damit zu klein wird.

Überraschend ergibt die Anordnung der Vorwiderstände auf einer Printplatte einen weit besseren Abgleich der LED-Chips hinsichtlich ihrer Lichtemission. Die Leuchtdiodenchips können daher näher an ihrem Grenzwert betrieben werden, so dass die Lichtausbeute insgesamt steigt und damit das Durchhärtungsergebnis verbessert wird.

Durch die Anordnung der Vorwiderstände auf der Printplatte gelingt es, die LED-Chips so kompakt wie möglich anzuordnen und die Vorwiderstände aus dem optischen Bereich herauszunehmen, so dass der Abgleich, beispielsweise durch Lasertrimmen deutlich vereinfacht ist.

Zugleich kann die Printplatte eine thermisch stabile Abstützung für eine Stützglied für eine Linse, wie eine Abdecklinse oder eine Sammellinse bilden, so dass es nicht erforderlich ist, thermisch besonders stabile Materialien für das Stützglied zu verwenden. Hierdurch wird auch die Wärmeeinleitung in die Linse selbst verringert, so dass auch bei hoher Lichtleistung und damit einer großen Wärmeabgabe der LED-Chips nicht die Gefahr besteht, dass die Linse beschädigt wird.

Um die LED-Chips dennoch im günstigsten Abstand vor der ersten Linse, der Abdecklinse, anzuordnen, kann es wünschenswert sein, einen Vorsprung des Basiskörpers zu belassen, der die LED-Chips aufnimmt. Die Printplatte kann sich dann auf gleicher Höhe wie die LED-Chips befinden, was für das Bonden günstig ist.

Besonders günstig ist es auch, wenn Kontaktflächen der Printplatte in den optischen Bereich, also den Bereich innerhalb des Stützglieds für die Linse, hereinragen. Das Bonden lässt sich dann besonders leicht realisieren, und über an sich bekannte Leiterbahnen wird die Stromversorgung der LED-Chips sichergestellt, wobei auch für eine Mehrzahl von LED-Chips oder auch für alle LED-Chips eine gemeinsame Masse-Kontaktfläche bereitgestellt werden kann, so dass bei einer Anzahl n von LED-Chips lediglich n+1 Kontaktflächen und eine dementsprechende Anzahl von Leiterbahnen erforderlich sind.

Bevorzugt ist jedem LED-Chip ein entsprechender Vorwiderstand zugeordnet, und der Abgleich erfolgt in an sich bekannter Weise durch selektive Spannungsbeaufschlagung des entsprechenden Strompfads bei gleichzeitigem Lasertrimmen.

In besonderen Fällen mag auch eine Anzahl von n-1 Vorwiderständen ausreichen.

Bevorzugt sind die Leiterbahnen auf der Oberseite der Printplatte angeordnet, so dass die Vorwiderstände in geeigneter Technik unmittelbar dort angebracht sein können. Die Vorwiderstände selbst lassen sich in Dickschichttechnik, in Dünnschichttechnik oder gegebenenfalls auch als diskrete und aufgelötete Vorwiderstände realisieren, wobei einfach trimmbare Vorwiderstände bevorzugt sind.

In vorteilhafter Ausgestaltung ist es vorgesehen, nach dem Trimmen die gesamte Leiterbahn, also einschließlich der Vorwiderstände, jedoch ohne die Bondflächen für die LED-Chips, mit einem Schutzlack zu versehen, um eine Beeinflußung der Widerstandswerte durch Umgebungseinflüsse auszuschließen.

Das Stützglied für die Linse kann sich dann ohne Weiteres auch durch den Schutzlack geschützten Leiterbahnen abstützen, wobei es aber auch möglich ist, Stützzapfen außerhalb des Bereichs der Leiterbahn vorzusehen, so dass das Stützglied sich lediglich dort abstützt.

In einer weiteren vorteilhaften Ausgestaltung ist es vorgesehen, dass die LED-Chips einander benachbart, und in einem zentralen Bereich des Basiskörpers angeordnet sind.

In einer weiteren vorteilhaften Ausgestaltung ist es vorgesehen, dass die Printplatte zwischen dem Rand des Basiskörpers und den LED-Chips angeordnet ist.

In einer weiteren vorteilhaften Ausgestaltung ist es vorgesehen, dass ein erster LED-Chip in einer optischen Achse angeordnet ist und eine Mehrzahl von weiteren LED-Chips, insbesondere symmetrisch zueinander und den ersten LED-Chip nach einer Art eines Kreuzes oder Sternes umgebend, radial außerhalb des ersten LED-Chips angeordnet sind.

In einer weiteren vorteilhaften Ausgestaltung ist es vorgesehen, dass insgesamt vier weitere LED-Chips den ersten LED-Chip umgeben.

In einer weiteren vorteilhaften Ausgestaltung ist es vorgesehen, dass zwischen zwei einander benachbarten LED-Chips ein Reflektorelement angeordnet ist, das sich an dem Basiskörper und/oder der Printplatte und/oder den LED-Chips abstützt.

In einer weiteren vorteilhaften Ausgestaltung ist es vorgesehen, dass das Reflektorelement zwei im Wesentlichen schräg verlaufende Reflexionsflächen aufweist, wobei jede Reflexionsfläche aus dem benachbarten LED-Chip stammende Strahlung reflektiert.

In einer weiteren vorteilhaften Ausgestaltung ist es vorgesehen, dass die Reflexionsflächen in Richtung der optischen Achse betrachtet sich im Wesentlichen entsprechend der die Höhe der Printplatte erstrecken oder die Printplatte überragen und insbesondere leicht konkav oder parabolisch ausgestaltet sind.

In einer weiteren vorteilhaften Ausgestaltung ist es vorgesehen, dass mehrere Reflektorelemente unter Bildung eines Gitterreflektors miteinander verbunden sind, wobei insbesondere der Gitterreflektor sich an dem Basiskörper und/oder der Printplatte und/oder den LED-Chips abstützt.

In einer weiteren vorteilhaften Ausgestaltung ist es vorgesehen, dass die LED-Chips in einem zentralen Bereich des Basiskörpers, im Wesentlichen auf der Höhe der Printplatte, angebracht sind.

In einer weiteren vorteilhaften Ausgestaltung ist es vorgesehen, dass sich zwischen LED-Chips, insbesondere zwischen äußeren LED-Chips, und der Printplatte Strahlungsabsorber erstrecken, die insbesondere mit dem Basiskörper in Wärmeleitverbindungen miteinander verbunden sind.

In einer weiteren vorteilhaften Ausgestaltung ist es vorgesehen, dass die Strahlungsabsorber zugleich wärmedämmend ausgebildet sind und insbesondere aus Keramik bestehen.

In einer weiteren vorteilhaften Ausgestaltung ist es vorgesehen, dass die Strahlungsabsorber sich mindestens über die Breite der LED-Chips erstrecken und insbesondere eine größere Höhe als die LED-Chips aufweisen, bevorzugt etwa die 1,5 bis 5-fache Höhe und besonders bevorzugt etwa die zweifache Höhe der LED-Chips.

Gemäß der vorliegenden Erfindung ist eine Abdecklinse im Strahlengang nach den LED-Chips angeordnet und ein ringförmiger oder rohrförmiger Abstandshalter für diese vorgesehen. Erfindungsgemäß ist der Abstandshalter auf der Printplatte und/öder dem Basiskörper abgestützt.

In einer weiteren vorteilhaften Ausgestaltung ist es vorgesehen, dass sich zwischen den LED-Chips, dem Abstadhalter und der Abdecklinse ein geschlossener Raum erstreckt, der eine durchsichtige oder durchscheinende, flüssige oder gelförmige Substanz, insbesondere Silikongel oder eine Vergussmasse aufweist.

In einer weiteren vorteilhaften Ausgestaltung ist es vorgesehen; dass die Substanz Phosphorpartikel aufweist.

In einer weiteren vorteilhaften Ausgestaltung ist es vorgesehen, dass mindestens eine Leiterbahn der Printplatte unter dem Abstandshalter hindurch verläuft.

In einer weiteren vorteilhaften Ausgestaltung ist es vorgesehen, dass der oder die Vorwiderstände außerhalb des Stützglieds frei zugänglich angebracht sind und dort abgleichbar sind.

In einer weiteren vorteilhaften Ausgestaltung ist es vorgesehen, dass der oder die Vorwiderstände über Widerstands-Kontaktflächen mit der Printplatte verbunden sind, insbesondere aufgelötet sind.

In einer weiteren vorteilhaften Ausgestaltung ist es vorgesehen, dass der oder die Vorwiderstände als Widerstandsbahn ausgebildet ist oder sind, deren Breite an mindestens einer Stelle, beispielsweise durch Lasertrimmen, einstellbar, insbesondere reduzierbar ist.

In einer weiteren vorteilhaften Ausgestaltung ist es vorgesehen, dass der Vorwiderstand auf die Printplatte aufgedruckt oder in Dickschicht-Technik aufgebracht ist und insbesondere eine Masse oder Paste aufweist, die leitende Partikel, insbesondere aus Graphit, enthält.

In einer weiteren vorteilhaften Ausgestaltung ist es vorgesehen, dass die den LED-Chips zugewandte Seite der Abdecklinse im Wesentlichen plan oder konvex oder konkav ausgebildet ist.

In einer weiteren vorteilhaften Ausgestaltung ist es vorgesehen, dass der Basiskörper wenigstens teilweise aus Kupfer besteht und/oder wenigstens teilweise mit Gold oder Nickel-Gold beschichtet ist.

In einer weiteren vorteilhaften Ausgestaltung ist es vorgesehen, dass im Strahlengang nach der Abdecklinse eine Sammellinse angeordnet ist, deren Durchmesser insbesondere größer als der Durchmesser der Abdecklinse ist.

Gemäß der vorliegenden Erfindung ist von den LED-Chips beabstandet im Strahlengang nach diesen und auch im Strahlengang nach der Abdecklinse ein Reflektor angeordnet.

In einer weiteren vorteilhaften Ausgestaltung ist es vorgesehen, dass im Strahlengang nach dem Reflektor eine Lichtleiter angeordnet ist.

In einer weiteren vorteilhaften Ausgestaltung ist es vorgesehen, dass die LED-Chips Licht mit unterschiedlichen Wellenlängen ausstrahlen.

In einer weiteren vorteilhaften Ausgestaltung ist es vorgesehen, dass die LED-Chips Licht mit gleichen Wellenlängen ausstrahlen.

In einer weiteren vorteilhaften Ausgestaltung ist es vorgesehen, dass die Printplatte sich insbesondere auch in die zwischen den Schenkeln des Kreuz liegenden Flächen erstreckt.

In einer weiteren vorteilhaften Ausgestaltung ist es vorgesehen, dass das Lichthärtgerät als Handgerät mit einem Griff ausgebildet ist.

In einer weiteren vorteilhaften Ausgestaltung ist es vorgesehen, dass das Lichthärtgerät ein Gehäuse aufweist, an dem die Sammellinse abgestützt ist.

Weitere Vorteile, Einzelheiten und Merkmale ergeben sich aus der nachfolgenden Beschreibung mehrerer Ausführungsbeispiele anhand der Zeichnung.

Es zeigen:
Fig. 1 ein Schnitt durch ein erstes Beispiel einer Strahlungsquelle, die als solche die vorliegende Erfindung nicht definiert, sondern seinen Kontext veranschaulicht, als Teil eines Lichthärtgeräts, in teilweise schematisierter Darstellung;
Fig. 2 die Draufsicht auf das illustrative Beispiel gemäß Fig. 1;
Fig. 3 ein Schnitt durch ein weiteres illustratives Beispiel, das als solches die vorliegende Erfindung nicht definiert, in einer Darstellung entsprechend der Darstellung gemäß Fig. 1;
Fig. 4 eine Draufsicht auf das weitere illustrative Beispiel gemäß Fig. 3;
Fig. 5 ein drittes illustratives Beispiel einer Strahlungsquelle, die als solche die vorliegende Erfindung nicht definiert, in einer Schnittdarstellung und in schematisierter Form;
Fig. 6 ein viertes illustratives Beispiel einer Strahlungsquelle, die als solche die vorliegende Erfindung nicht definiert, in der Draufsicht;
Fig. 7 das illustrative Beispiel gemäß Fig. 6 in Seitenansicht, teilweise aufgebrochen;
Fig. 8 ein Schnitt durch eine erste Ausführungsform einer erfindungsgemäßen Strahlungsquelle;
Fig. 9 eine Draufsicht auf die Ausführungsform gemäß Fig. 8;
Fig. 10 eine Draufsicht auf einen Teil einer erfindungsgemäßen weiteren Strahlungsquelle; und
Fig. 11 ein Schnitt durch die Ausführungsform gemäß Fig. 10.

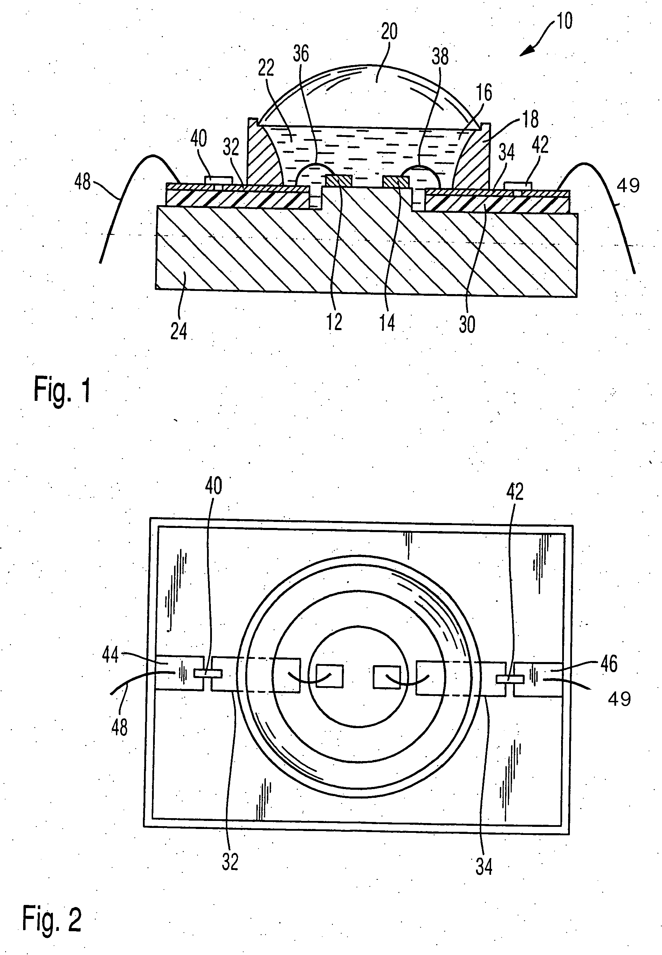

Die in Fig. 1 dargestellte Halbleiter-Strahlungsquelle 10 weist eine Mehrzahl von LED-Chips 12, 14 auf, in dem dargestellten Beispiel zwei Chips. Die Chips sind in einem Innenraum 16 aufgenommen, der von einem Stützglied 18 für eine Linse 20 umgeben ist. Die Linse 20 ist in einer umlaufenden Anlage-' schulter des Stützglieds gelagert und abgedichtet. Der Innenraum 16 ist in dem dargestellten Beispiel mit einem durchsichtigen Medium 22 gefüllt.

Die LED-Chips 12, 14 sind in Wärmeleitverbindung fest auf einem Basiskörper 24 angebracht. Der Basiskörper kann beispielsweise aus Kupfer bestehen und die Chips können über einen Kleber mit einer Stärke von wenigen Mikrometern aufgeklebt sein, so dass ein extrem geringer Wärmewiderstand vorliegt, der auch Hochleistungs-LED-Chips ermöglicht.

Es ist vorgesehen, dass die LED-Chips 12 und 14 umgeben von einer Printplatte angeordnet sind. Die Printplatte ist in recht einfacher Weise, beispielsweise mittels eines Doppelklebebands, auf dem Basiskörper befestigt. Es versteht sich, dass anstelle dessen auch eine beliebige andere geeignete Art der Befestigung möglich ist, beispielsweise auch mittels Schrauben, Nieten, oder dergleichen.

In an sich bekannter Weise weist die Printplatte 30 Leiterbahnen auf, die sich entweder auf ihrer Oberseite oder innerhalb der Printplatte erstrecken, in Einzelfällen auch auf der Unterseite. Die bevorzugt auf der Oberseite der Printplatte angeordneten Leiterbahnen enden den LED-Chips 12 und 14 benachbart in Anschlußflächen. Dort sind Bondpads ausgebildet, und die Verbindung zwischen LED-Chips 12 und 14 und diesen Anschlussflächen der Leiterbahnen 32 und 34 erfolgt über Bonddrähte 36 und 38. Die Anschlussflächen, die Bonddrähte 36 und 38 und die LED-Chips 12 und 14 sind insofern vollständig im Innenraum 16 aufgenommen. Der Innenraum16 kann mit einem beliebigen geeigneten Medium gefüllt sein, beispielsweise mit einer Vergussmasse, die Phosphorpartikel aufweist, die durch die von den LED-Chips abgegebene Lichtstrahlung angeregt werden.

Das Stützglied 18 ist in dem dargestellten Beispiel auf der Printplatte 30 abgestützt. Durch diese Ausgestaltung ist es besser gegenüber von den LED-Chips 12 und 14 erwärmten Basiskörper 24 thermisch isoliert, und es werden geringere Wärmespannungen in die Linse 20 eingeleitet.

Die Leiterbahnen 32 und 34 erstrecken sich unter dem Stützglied 18 hindurch nach außen hin. Dort sind je Vorwiderstände 40, 42 vorgesehen, wobei je ein Vorwiderstand 40, 42 mit einem LED-Chip 12, 14 verbunden ist. Die Verbindung erfolgt über die je zugehörige Leiterbahn 32 bzw. 34, also unter dem Stützglied 18 hindurch.

Der Vorwiderstand 40, 42 ist bei dieser Lösung je als abgleichbarer Vorwiderstand ausgebildet und auf der Printplatte über entsprechende Anschlussfelder im Verlauf der Leiterbahnen 32 und 34 aufgelötet. Beispielsweise kann jeder Vorwiderstand aus einer Widerstandsbahn bestehen, beispielsweise aus einem Keramikkörper mit aufgebrachter Graphitschicht, der über Lasertrimmen abgleichbar ist.

Der Abgleich erfolgt dann so, dass die LED-Chips 12 und 14 nach Fertigstellung der illustrativen Strahlungsquelle über Lasertrimmen abgeglichen werden. Hierzu wird die Lichtleistung jeder einzelnen Lichtquelle, also beispielsweise der LED-Chips 12 und 14, hierbei durch abwechselndes Einschalten gemessen und ein entsprechender Abgleich in der gewünschten Weise vorgenommen.

In diesem Zusammenhang ist es besonders günstig, dass der Abgleich erfolgt, nachdem bereits die Linse 20 aufgebracht ist und auch die Vergussmasse in den Innenraum 16 eingefüllt ist. Etwaige Ungleichmäßigkeiten der optische Medien lassen sich hierdurch zusätzlich ohne weiteres in den Abgleichprozess einbeziehen.

Durch die Realisierung einer Linse mit planer Unterseite und konvexer Oberseite gelingt es, die Linse recht nah an den Bereich der LED-Chips heranzuführen, um eine günstige Abstrahl-Charakteristik zu realisieren.

Aus Fig. 2 ist die Lösung gemäß Fig. 1 in der Draufsicht ersichtlich. Gleiche Bezugszeichen weisen hier wie auch in den weiteren Figuren auf gleiche Teile hin. Es ist ersichtlich, dass sich jenseits der Vorwiderstände 40 und 42 weitere Anschlussbahnen 44 und 46 erstrecken, die mit Anschlussdrähten 48 und 49 verbunden sind, die der Stromzuführung der LED-Chips dienen. Bei dieser Lösung ist es vorgesehen, den Basiskörper 24 als gemeinsame Masse zu verwenden, was in den Fig. 1 und 2 nicht im Einzelnen dargestellt ist.

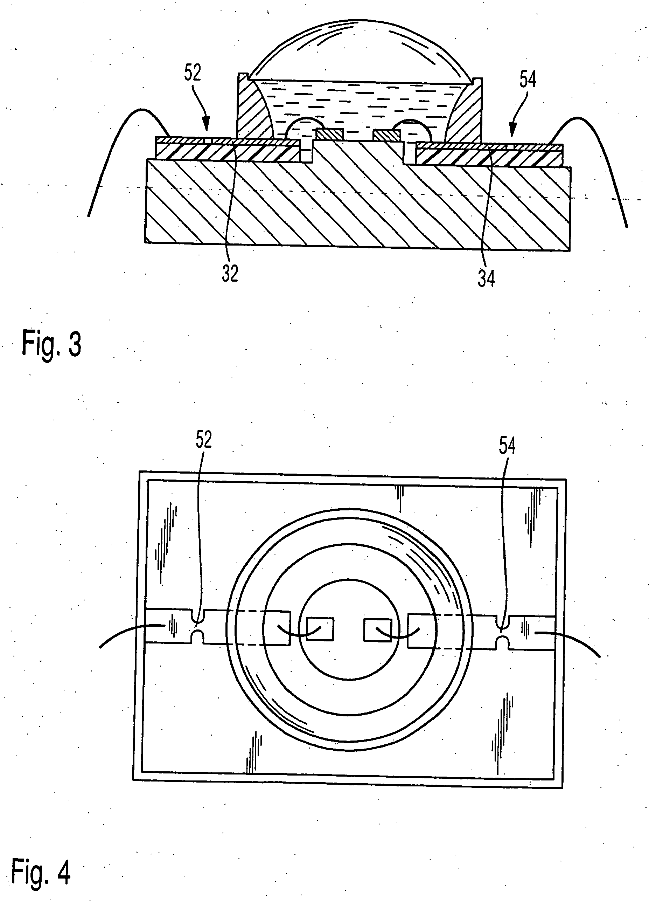

Aus Fig. 3 und 4 ist eine modifizierte Ausgestaltung der Halbleiter-Strahlungsquelle ersichtlich. Bei dieser Lösung ist der diskrete Vorwiderstand 40 und 42 je durch eine Einschnürung 52, 54 der betreffenden Leiterbahn 32, 34 ersetzt, wobei die Leiterbahn 32, 34 hier dann je aus einem Material besteht, dass einen etwas erhöhten Widerstand aufweist. Über die Tiefe der Einschnürung 52, 54 lässt sich der je realisierte Vorwiderstand in weiten Bereichen einstellen.

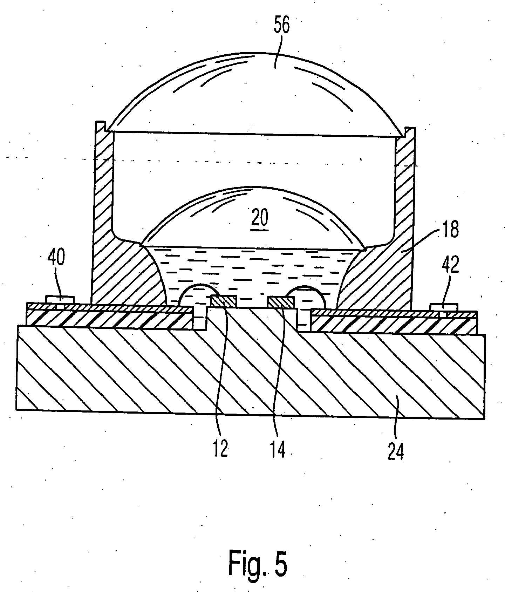

Aus Fig. 5 ist eine weitere modifizierte Ausgestaltung ersichtlich. Bei dieser Lösung ist das Stützglied 18 nach vorne wesentlich verlängert. Zusätzlich zu der Linse 20 nimmt es eine Sammellinse 56 auf, deren Durchmesser den Durchmesser der Linse 20 deutlich überragt, und die wiederum als plankonvexe Linse vor der Linse 20 angeordnet ist. Durch die Doppelanordnung der Linse 20 mit der Linse 56 lässt sich eine noch stärkere Bündelung der Lichtabgabe erzielen.

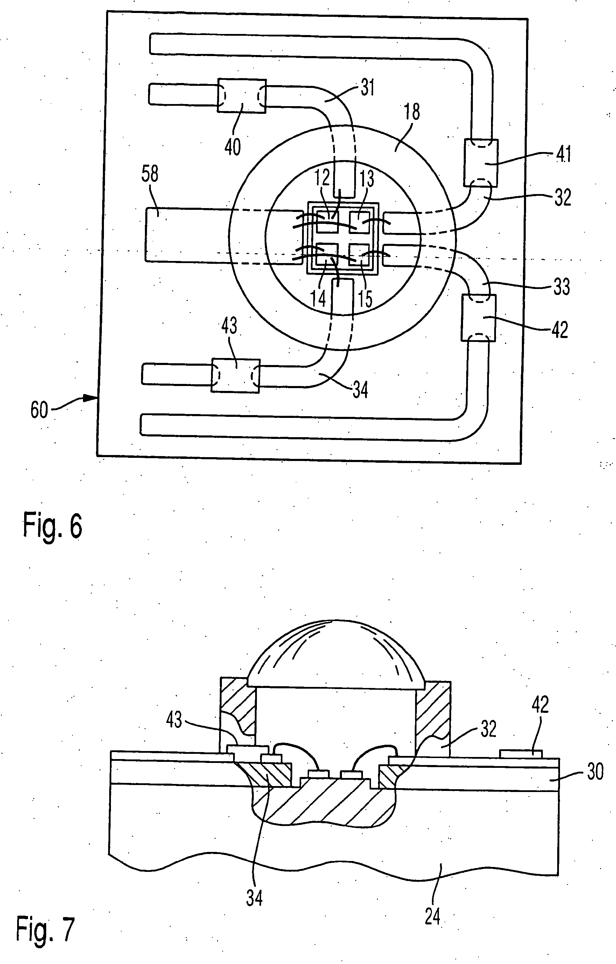

Eine weitere Ausgestaltung einer illustrativen Halbleiter-Strahlungsquelle ist aus Fig. 6 ersichtlich. Bei dieser Lösung ist eine Mehrzahl von LED-Chips 12, 13, 14, 15 vorgesehen, die in einer Art Quadrat angeordnet sind. Die LED-Chips weisen hier je Bonddrähte auf ihrer Oberseite auf, die einerseits einer Masse-Leiterbahn 58 zugeleitet sind, und andererseits Verbindungen mit Leiterbahnen 31, 32, 33, 34 herstellen. Die Leiterbahnen 31 bis 34 sind hier wiederum auf einer Printplatte 30 ausgebildet und erstrecken sich mit Anschlussfeldern in den Innenraum 16 eines Stützglieds 18 hinein. Sie unterlaufen das Stützglied 18 und enden je an einem zugehörigen Vorwiderstand 40, 41, 42, 43, wobei sämtliche Vorwiderstände abgleichbar sind. Dies ist für die Vorwiderstände 42 und 43 über eine dort ersichtliche Einschnürung schematisch dargestellt. Bei dieser Ausgestaltung sind weitere Leiterbahnen so angeordnet, dass eine Kontaktierung von einer Seite 60 der Leiterbahn möglich ist. Dies ist in an sich bekannter Weise bei Printplatten ohne Weiteres realisierbar.

Aus Fig. 7 ist ersichtlich, dass die Leiterbahnen 32 und 34 sich je auf der Printplatte 30 erstrecken. Es ist andererseits aber auch genauso möglich, eine Printplatte in Mulitlayertechnik zu verwenden, oder über Durchkontaktierungen die Leiterbahnen an einer beliebigen Stelle der Höhe der Printplatte verlaufen zu lassen. Bei auf der Oberseite angeordneten Leiterbahnen ist bevorzugt ein Schutzlack vorgesehen, der die Printplatte insgesamt, also einschließlich der Leiterbahnen und der Vorwiderstände 40 bis 43 abdeckt. Es versteht sich, dass dieser Schutzlack erst nach dem Abgleich der Vorwiderstände aufgebracht wird.

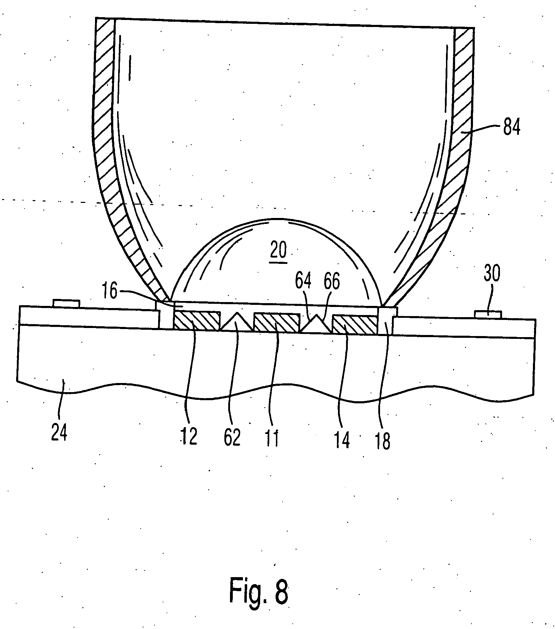

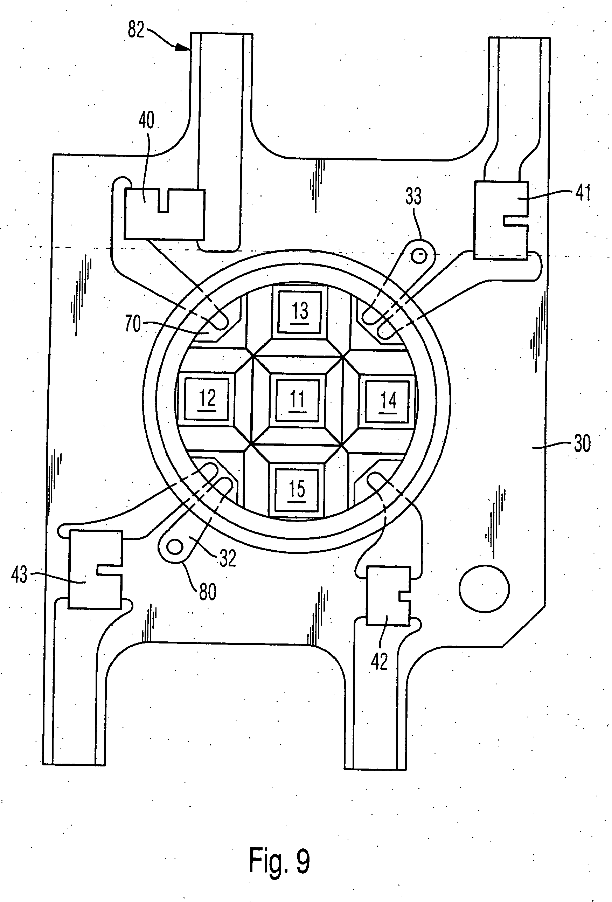

Aus Fig. 8 und 9 ist eine erste bevorzugte Ausführungsform ersichtlich. Diese Ausführungsform weist eine etwas kompaktere Anordnung der Linse 20 auf. Das Stützglied ist bei dieser Ausführungsformpartiell auf der Printplatte 30 abgestützt und partiell unmittelbar auf dem Basiskörper 24 abgestützt. Es sind insgesamt fünf LED-Chips 11, 12, 13, 14 und 15 vorgesehen, die - wie aus Fig. 9 ersichtlich ist - sich im Wesentlichen kreuzweise erstrecken. Zwischen den LED-Chips 11 bis 15 erstreckt sich ein Gitterreflektor 62, der beispielsweise als kleiner Kunststoffkörper ausgebildet sein kann, der in die Mehrfachanordnung der LED-Chips eingelegt wird oder gleich als Abstandhalter für diese dient. Er weist schrägverlaufende Reflektoroberflächen 64 und 66 auf, die sich beispielsweise für das LED-Chip 11 an den vier Seitenkanten des quadratischen Chips erstrecken und das seitlich abgegebene Licht nach vorne werfen. Hierdurch lässt sich die Lichtausbeute des in der Linse 20 gebündelten Lichts weiter erhöhen. Die Gitterstruktur des Gitterreflektors 62 erstreckt sich dem Kreuz entsprechend fingerförmig nach außen, wie es aus Fig. 9 ersichtlich ist. In den freien Ecken des Kreuzes erstreckt sich die Printplatte 30 in den Innenraum 16 hinein. So lassen sich für das dargestellte Ausführungsbeispiel sechs Anschlussfelder 70 bereitstellen, die je der Stromversorgung der Chips 11 bis 15 dienen, wobei die Verdrahtung über Bonddrähte, die der Übersichtlichkeit halber in den Fig. 8 und 9 nicht dargestellt sind, realisiert ist.

Wie aus der Darstellung gemäß Fig. 9 ersichtlich ist, enden Leiterbahnen 32, 33 der so bereitgestellten sechs Leiterbahnen in Durchkontaktierungen 80 und werden in einer anderen Ebene der Multilayer-Printplatte 30 weitergeleitet, beispielsweise zur Unterseite von zweien der vier Anschlussfahnen 82, um die Stromversorgung der Halbleiter-Strahlungsquelle bereitzustellen.

Hier ist die erfindungsgemäß besonders günstige kompakte Anordnung der Chips realisierbar, und ein Abgleich erfolgt über kalibrierbare Vorwiderstände 40 bis 43. Bei dieser Lösung ist es vorgesehen, die Strahlungsquelle praktisch zweikanalig zu betreiben, wobei der zentrale LED-Chip 11 bei einer Frequenz und die weiteren LED-Chips 12 bis 15 bei einer anderen Frequenz strahlt. Dementsprechend ist ein Abgleich des LED-Chips 11 nicht erforderlich, nachdem lediglich die LED-Chips 12 bis 15 zueinander parallel geschaltet sind, kann aber bei Bedarf zusätzlich vorgesehen sein, indem ein fünfter Vorwiderstand realisiert ist.

Bei der aus Fig. 8 und 9 ersichtlichen Ausführungsform ist, gemäß der vorliegenden Erfindung, zusätzlich ein Reflektor 84 vorgesehen, der sich vor der eigentlichen Halbleiter-Strahlungsquelle erstreckt und in an sich bekannter Weise eine leicht gekrümmte Oberfläche aufweist. Der Reflektor 84 dient dann dazu, etwaige, trotz der starken Bündelung durch die Linse 20 noch seitlich austretende Strahlung besser nach vorne abzustrahlen.

Hiervon beabstandet, in der optischen Achse vor der Sammellinse 20, erstreckt sich das Eintrittsende eines Lichtleiters, der in den Figuren nicht dargestellt ist.

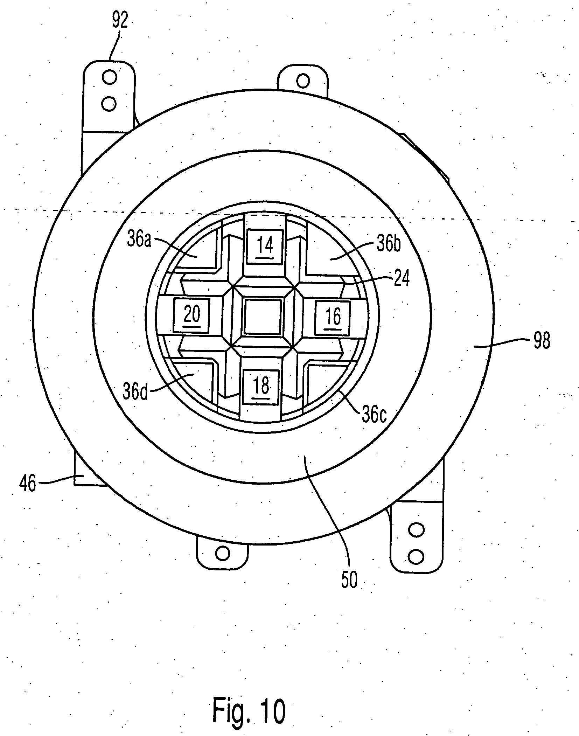

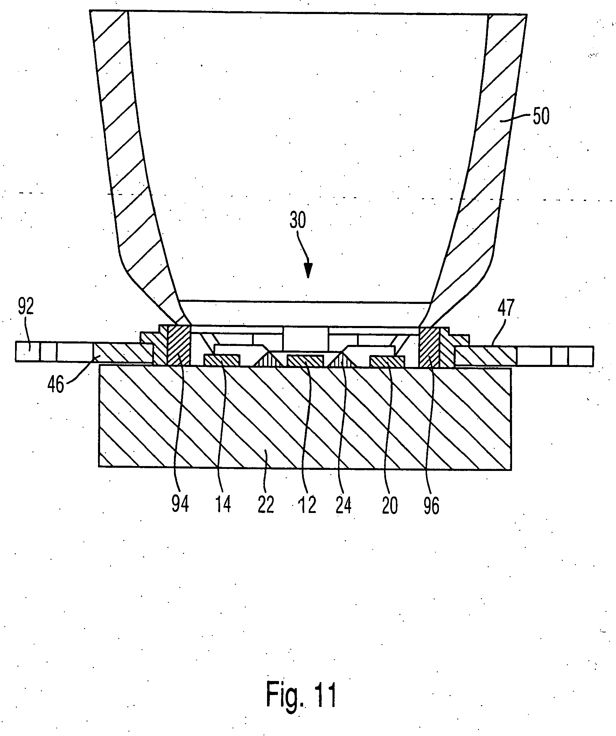

Eine weitere Aus führungsform ist aus Fig. 10 und 11 ersichtlich. Dort wie auch in den weiteren Figuren weisen gleiche oder ähnliche Bezugszeichen auf gleiche oder ähnliche Teil hin. Bei dieser Lösung sind wiederum fünf LED-Chips 12 bis 20 im Wesentlichen kreuzförmig angeordnet, so dass die Chips 14 bis 20 einen zentralen Chip 12 umgeben. Die Chips sind je von Reflektorelementen 24 umgeben, die sich zwischen und neben ihnen erstrecken und Teil eines Abstandshalter bilden, der einen Reflektor 50 vor dem LED-Chips abstützt.

In der Zeichnungsebene unterhalb des Reflektors 50 und wie es besser aus Fig. 11 ersichtlich ist, sind Strahlungsabsorber 24 und 96 vorgesehen, die sich zwischen den äußeren LED-Chips 14 und 20 einerseits und der Printplatte 46 erstrecken. Diese Lösung ist besonders günstig wenn es gilt, hoch energiereiche Strahlung abzufangen, ohne die Printplatte zu beeinträchtigen. Die Strahlungsabsorber 94 und 96 können als massive Körper auf dem Basiskörper 22 aufgebracht sein, beispielsweise über eine extrem dünne Klebeschicht, ähnlich wie auch die Chips selbst, so dass eine gute Wärmeableitung gewährleistet ist.

Die Strahlungsabsorber 94 und 96, von denen natürlich bei den weiteren LED-Chips 16 und 18 ebenfalls zwei entsprechende Strahlungsabsorber vorgesehen sind, können aus beliebigen geeigneten Material bestehen. In Frage kommen beispielsweise Kunststoffkörper, Aluminiumkörper, aber auch bevorzugt Keramikkörper, die auch dunkel eingefärbt sein können, um noch eine bessere Strahlungsabsorbtion zu gewährleisten.

In dem in Fig. 10 dargestellten Ausführungsbeispiel ist die Printplatte 46 zudem von einem Schutzring 98 abgedeckt, der ebenfalls dem besseren Schutz, insbesondere der Kalibrierwiderstände dient, denn durch eine zu starke Erwärmung der Kalibrierwiderstände kann die Kalibrierung beeinträchtigt werden.

Es versteht sich, dass der Schutzring 98 so dimensioniert ist, dass die Anschlussbahnen 92 frei bleiben, wobei der Schutzring bevorzugt mindestens auf seiner Unterseite elektrisch isolierend ausgestaltet ist.

Aus Fig. 11 ist ersichtlich, dass die LED-Chips 14, 12 und 20 je auch von dem Reflektorelement beabstandet angeordnet sind. Auch dies trägt dazu bei, die intensive Wärmeabgabe durch die LED-Chips nicht zu einer intensiven Wärmebeaufschlagung des Gitterreflektors 30, der aus Kunststoff mit verspiegelten Oberflächen bestehen kann, werden zu lassen.

Auch wenn bei der Darstellung gemäß Fig. 11 keine Linse entsprechend der Abdecklinse 20 dargestellt ist, versteht es sich, dass diese gemäß der vorliegenden Erfindung vorgesehen ist.

## Patentansprüche

1. Halbleiter-Strahlungsquelle, mit einem Basiskörper (24), auf dem mindestens zwei LED-Chips (11-15) in Wärmeleitverbindung mit diesem gelagert sind, wobei mindestens ein Chip (11-15) mit einem abgleichbaren Vorwiderstand (40-43) verbunden ist, und auf dem Basiskörper (24) auch mindestens eine Printplatte (30) gelagert ist, die den Vorwiderstand (40-43) trägt, wobei eine Abdecklinse (20) im Strahlengang nach den LED-Chips (11-15) angeordnet ist und ein ringförmiger oder rohrförmiger Abstandshalter (18) für diese vorgesehen ist und dass der Abstandshalter (18) auf der Printplatte (30) und/oder dem Basiskörper (24) abgestützt ist und wobei von den LED-Chips (11-15) beabstandet im Strahlengang nach diesen und auch im Strahlengang nach der Abdecklinse (20) ein Reflektor (50; 84) angeordnet ist.

2. Strahlungsquelle nach Anspruch 1, wobei die LED-Chips (11-15) einander benachbart, und in einem zentralen Bereich des Basiskörpers (24) angeordnet sind.

3. Strahlungsquelle nach Anspruch 2, wobei die Printplatte (30) zwischen dem Rand des Basiskörpers (24) und den LED-Chips (11-15) angeordnet ist.

4. Strahlungsquelle nach einem der vorhergehenden Ansprüche, wobei ein erster LED-Chip (11) in einer optischen Achse angeordnet ist und eine Mehrzahl von weiteren LED-Chips (12-15), insbesondere symmetrisch zueinander und den ersten LED-Chip (11) nach einer Art eines Kreuzes oder Sternes umgebend, radial ausserhalb des ersten LED-Chips (11) angeordnet sind.

5. Strahlungsquelle nach Anspruch 4, wobei insgesamt vier weitere LED-Chips (12-15) den ersten LED-Chip (11) umgeben.

6. Strahlungsquelle nach einem der vorhergehenden Ansprüche, wobei zwischen zwei einander benachbarten LED-Chips ein Reflektorelement (62) angeordnet ist, das sich an dem Basiskörper (24) und/oder der Printplatte (30) und/oder den LED-Chips (11-15) abstützt.

7. Strahlungsquelle nach Anspruch 6, wobei das Reflektorelement (62) zwei im Wesentlichen schräg verlaufende Reflexionsflächen (64, 66) aufweist, und wobei jede Reflexionsfläche (64, 66) aus dem benachbarten LED-Chip (11, 14) stammende Strahlung reflektiert.

8. Strahlungsquelle nach Anspruch 7, wobei die Reflexionsflächen (64, 66) in Richtung der optischen Achse betrachtet sich im Wesentlichen entsprechend der die Höhe der Printplatte (30) erstrecken oder die Printplatte (30) überragen und insbesondere leicht konkav oder parabolisch ausgestaltet sind.

9. Strahlungsquelle nach einem der vorhergehenden Ansprüche, wobei mehrere Reflektorelemente (62) unter Bildung eines Gitterreflektors miteinander verbunden sind, und wobei insbesondere der Gitterreflektor sich an dem Basiskörper (24) und/oder der Printplatte (30) und/oder den LED-Chips (11-15) abstützt.

10. Strahlungsquelle nach einem der vorhergehenden Ansprüche, wobei die LED-Chips (11-15) in einem zentralen Bereich des Basiskörpers (24), im Wesentlichen auf der Höhe der Printplatte (30), angebracht sind.

11. Strahlungsquelle nach einem der vorhergehenden Ansprüche, wobei sich zwischen den LED-Chips (11-15), insbesondere zwischen äußeren LED-Chips (12-15), und der Printplatte (30) Strahlungsabsorber (94, 96) erstrecken, die insbesondere mit dem Basiskörper (24) in Wärmeleitverbindung miteinander verbunden sind.

12. Strahlungsquelle nach Anspruch 11, wobei die Strahlungsabsorber (94, 96) zugleich wärmedämmend ausgebildet sind und insbesondere aus Keramik bestehen.

13. Strahlungsquelle nach einem der Ansprüche 11 oder 12, wobei die Strahlungsabsorber (94, 96) sich mindestens über die Breite der LED-Chips (11-15) erstrecken und insbesondere eine größere Höhe als die LED-Chips (11-15) aufweisen, bevorzugt etwa die 1,5 bis 5-fache Höhe und besonders bevorzugt etwa die zweifache Höhe der LED-Chips (11-15).

14. Strahlungsquelle nach einem der vorhergehenden Ansprüche, wobei sich zwischen den LED-Chips (11-15), dem Abstandhalter (18) und der Abdecklinse (20) ein geschlossener Raum (16) erstreckt, der eine durchsichtige oder durchscheinende, flüssige oder gelförmige Substanz (22), insbesondere Silikongel oder eine Vergussmasse aufweist.

15. Strahlungsquelle nach Anspruch 14, wobei die Substanz (22) Phosphorpartikel aufweist.

16. Strahlungsquelle nach einem der vorhergehenden Ansprüche, wobei mindestens eine Leiterbahn (31-34) der Printplatte (30) unter dem Abstandshalter (18) hindurch verläuft.

17. Strahlungsquelle nach einem der vorhergehenden Ansprüche, wobei der oder die Vorwiderstände (40-43) ausserhalb des Abstandshalters (18) frei zugänglich angebracht sind und dort abgleichbar sind.

18. Strahlungsquelle nach einem der vorhergehenden Ansprüche, wobei der oder die Vorwiderstände (40-43) über Widerstands-Kontaktflächen mit der Printplatte (30) verbunden sind, insbesondere aufgelötet sind.

19. Strahlungsquelle nach einem der vorhergehenden Ansprüche, wobei der oder die Vorwiderstände (40-43) als Widerstandsbahn ausgebildet ist oder sind, deren Breite an mindestens einer Stelle, beispielsweise durch Lasertrimmen, einstellbar, insbesondere reduzierbar ist.

20. Strahlungsquelle nach einem der vorhergehenden Ansprüche, wobei der Vorwiderstand (40-43) auf die Printplatte (30) aufgedruckt oder in Dickschicht-Technik aufgebracht ist und insbesondere eine Masse oder Paste aufweist, die leitende Partikel, insbesondere aus Graphit, enthält.

21. Strahlungsquelle nach einem der vorhergehenden Ansprüche, wobei die den LED-Chips (11-15) zugewandte Seite der Abdecklinse (20) im Wesentlichen plan oder konvex oder konkav ausgebildet ist.

22. Strahlungsquelle nach einem der vorhergehenden Ansprüche, wobei der Basiskörper (24) wenigstens teilweise aus Kupfer besteht und/oder wenigstens teilweise mit Gold oder Nickel-Gold beschichtet ist.

23. Strahlungsquelle nach einem der vorhergehenden Ansprüche, wobei im Strahlengang nach der Abdecklinse (20) eine Sammellinse (56) angeordnet ist, deren Durchmesser insbesondere größer als der Durchmesser der Abdecklinse (20) ist.

24. Strahlungsquelle nach einem der vorhergehenden Ansprüche, wobei im Strahlengang nach dem Reflektor (50; 84) ein Lichtleiter angeordnet ist.

25. Strahlungsquelle nach einem der vorhergehenden Ansprüche, wobei die LED-Chips (11-15) Licht mit unterschiedlichen Wellenlängen ausstrahlen.

26. Strahlungsquelle nach einem der Ansprüche 1 bis 24, wobei die LED-Chips (11-15) Licht mit gleichen Wellenlängen ausstrahlen.

27. Strahlungsquelle nach einem der Ansprüche 4 bis 26, wobei die Printplatte (30) sich insbesondere auch in die zwischen den Schenkeln des Kreuz liegenden Flächen erstreckt.

28. Lichthärtgerät mit mindestens einer Halbleiter-Strahlungsquelle nach einem der vorhergehenden Ansprüche, insbesondere zum Aushärten von lichtpolymerisierbaren Dentalmassen.

29. Lichthärtgerät nach Anspruch 28, wobei es als Handgerät mit einem Griff ausgebildet ist.

30. Lichthärtgerät nach Anspruch 28 oder 29, wobei das Lichthärtgerät ein Gehäuse aufweist, an dem die Sammellinse (56) abgestützt ist.

## Claims

1. A semiconductor radiation source having a base body (24) on which at least two LED chips (11-15) are mounted in heat-conducting connection therewith, at least one chip (11-15) being connected to an adjustable series resistor (40-43), and at least one printed circuit board (30) which carries the series resistor (40-43) also being mounted on the base body (24), wherein a cover lens (20) is arranged In the beam path downstream of the LED chips (11-15) and an annular or tubular spacer (18) is provided for said chips and the spacer (18) Is supported on the printed circuit board (30) and/or the base body (24) and wherein a reflector (50) is arranged spaced apart from the LED chips (11-15) In the beam path downstream thereof and is also arranged in the beam path downstream of the cover lens (20); 84).

2. The radiation source according to claim 1, wherein the LED chips (11-15) are adjacent to each other and are arranged in a central region of the base body (24).

3. The radiation source according to claim 2, wherein the printed circuit board (30) is arranged between the edge of the base body (24) and the LED chips (11-15).

4. The radiation source according to one of the preceding claims, wherein a first LED chip (11) is arranged in an optical axis and a plurality of other LED chips (12-15) is arranged radially outside the first LED chip (11), especially symmetrical to each other and Is arranged surrounding the first LED chip (11) in a cross-type or star-type manner.

5. The radiation source according to claim 4, wherein a total of four other LED chips (12-15) are arranged surrounding the first LED chip (11).

6. The radiation source according to one of the preceding claims, wherein a reflector element (62), which is supported on the base body (24) and/or the printed circuit board (30) and/or the LED chips (11-15), is arranged between two adjacent LED chips.

7. The radiation source according to claim 6, wherein the reflector element (62) comprises two substantially obliquely extending reflection surfaces (64, 66), and wherein each reflection surface (64, 66) reflects radiation originating from the adjacent LED chip (11, 14).

8. The radiation source according to claim 7, wherein the reflection surfaces (64, 66), as viewed in the direction of the optical axis, extend substantially In accordance with the height of the printed circuit board (30), or projecting beyond the printed circuit board (30) and especially being of slightly concave or parabolic configuration.

9. The radiation source according to one of the preceding claims, wherein a plurality of reflector elements (62) are connected to each other to form a grid reflector, and wherein especially the grid reflector is supported on the base body (24) and/or the printed circuit board (30) and/or the LED chips (11-15).

10. The radiation source according to one of the preceding claims, wherein the LED chips (11-15) are mounted in a central region of the base body (24), substantially at the level of the printed circuit board (30).

11. The radiation source according to one of the preceding claims, wherein radiation absorbers (94, 96) extend between the LED chips (11-15), especially between outer LED chips (12-15), and the printed circuit board (30), which radiation absorbers (94, 96) especially are connected to the base body (24) in heat-conducting connection among each other.

12. The radiation source according to claim 11, wherein the radiation absorbers (94, 96) simultaneously are formed being thermally Insulating and consisting especially of ceramics.

13. The radiation source according to one of claims 11 or 12, wherein the radiation absorbers (94, 96) extend at least across the width of the LED chips (11-15) and especially have a greater height than the LED chips (11-15), preferably about 1.5 to 5 times as high and particularly preferably about twice as high than the LED chips (11-15).

14. The radiation source according to one of the preceding claims, wherein a confined space (16) extends between the LED chips (11-15), the spacer 18) and the cover lens (20), and comprising a transparent or translucent liquid or gel substance (22), especially silicone gel or a casting compound.

15. The radiation source according to claim 14, wherein the substance (22) includes phosphor particles.

16. The radiation source according to any of the foregoing claims, wherein at least one conductor track (31 -34) of the printed circuit board (30) passes below the spacer (18).

17. The radiation source according to one of the preceding claims, wherein the series resistor or resistors (40-43) are mounted outside the spacer (18) to be freely accessible and adjustable.

18. The radiation source according to one of the preceding claims, wherein the series resistor or resistors (40-43) are connected to the printed circuit board (30) via resistor contact surfaces, especially being soldered thereon.

19. The radiation source according to one of the preceding claims, wherein the resistor or resistors (40-43) is or are designed as a resistance track, the width of which is adjustable, especially is reducible, in at least one location, for example by laser trimming.

20. The radiation source according to one of the preceding claims, wherein the series resistor (40-43) is printed on the printed circuit board (30) or Is applied using thick-film technology, and especially Including a compound or paste which contains conductive particles, especially made of graphite.

21. The radiation source according to one of the preceding claims, wherein the side of the cover lens (20) facing the LED chips (11-15) Is substantially planar or convex or concave.

22. The radiation source according to one of the preceding claims, wherein the base body (24) consists at least partially of copper and/or is at least partially coated with gold or nickel gold.

23. The radiation source according to one of the preceding claims, wherein a collecting lens (56) is arranged In the beam path downstream of the covering lens (20), the diameter of which collecting lens being especially larger than the diameter of the covering lens (20).

24. The radiation source according to one of the preceding claims, wherein an optical fiber is arranged In the beam path downstream of the reflector (50; 84).

25. The radiation source according to one of the preceding claims, wherein the LED chips (11-15) emit light of different wavelengths.

26. The radiation source according to one of the claims 1 to 24, wherein the LED chips (11-15) emit light of equal wavelengths.

27. The radiation source according to one of the claims 4 to 26, wherein the printed circuit board (30) additionally extends especially Into the surfaces located between the legs of the cross.

28. A light-curing apparatus comprising at least one semiconductor radiation source according to one of the preceding claims, especially for curing light-polymerizable dental masses.

29. The light-curing device according to claim 28, formed as a hand-held device comprising a handle.

30. The light curing apparatus according to claim 28 or 29, wherein the light curing apparatus comprises a housing on which the collecting lens (56) is mounted.

## Revendications

1. Source de rayonnement par semi-conducteurs avec un corps de base (24), sur lequel au moins deux puces LED (11-15) sont logées en contact thermique avec celui-ci, où au moins une puce (11-15) est connecté avec une résistance préliminaire (40-43) pouvant être réglée et au moins une carte de circuit imprimé (30) est logée sur le corps de base (24) qui porte la résistance préliminaire (40-43), où une lentille de recouvrement (20) est disposée dans la trajectoire du faisceau après les puces LED (11-15), et un écarteur (18) en forme annulaire ou tubulaire est prévu pour celle-ci et l'écarteur (18) est supporté sur la carte de circuit imprimé (30) et/ou le corps de base (24) et où un réflecteur (50, 84) espacé des puces LED (11-15) est disposé dans la trajectoire du faisceau après celles-ci et également dans la trajectoire du faisceau espacé de la lentille de recouvrement (20).

2. Source de rayonnement selon la revendication 1, où les puces LED (11-15) sont disposées côte à côte et dans une zone centrale du corps de base (24).

3. Source de rayonnement sélon la revendication 2, où la carte de circuit Imprimé (30) est disposée entre le bord du corps de base (24) et les puces LED (11-15).

4. Source de rayonnement selon loune des revendications précédentes, où une première puce LED (11) est disposée dans un axe optique et une majorité des autre puces LED (12-15) sont disposés de manière radiale à l'extérieur de la première puce LED (11), en particulier symétrique les unes aux autres et à la première puce LED (11) à la manière d'une croix ou d'une étoile environnante.

5. Source de rayonnement selon la revendication 4, où au total quatre puces LED (12-15) entourent la première puce LED (11).

6. Source de rayonnement à l'un des précédents prétend où un élément réflecteur (62) est disposé entre deux puces LED adjacentes, qui s'appuie sur le corps de base (24) ou la carte de circuit imprimé (30) et/ou les puces LED (11-15).

7. Source de rayonnement selon la revendication 5, où l'élément réflecteur (62) présente deux surfaces réfléchissantes (64, 66) s'étendant essentiellement en diagonale et où chaque surface réfléchissante (64, 66), réfléchit un rayonnement en provenance de la puce LED voisine (11, 14).

8. Source de rayonnement selon la revendication 7, où les surfaces réfléchissantes (64, 66) s'étendent essentiellement en fonction de la hauteur de la carte de circuit imprimé (30) considéré dans le sens de l'axe optique ou par dessus de la carte de circuit imprimé (30) et en particulier sont conçues légèrement concave ou parabolique.

9. Source de rayonnement selon l'une des revendications précédentes où plusieurs éléments réflecteurs (62) sont connectés entre eux, formant un réflecteur en treillis, où, en particulier le réflecteur en treillis s'appuie sur le corps de base (24) et/ou la carte de circuit imprimé (30) et/ou les puces LED (11-15).

10. Source de rayonnement selon l'une des revendications précédentes, où les puces LED (11-15) sont appliquées dans une zone centrale du corps de base (24), principalement à la hauteur de la carte de circuit Imprimé (30).

11. Source de rayonnement selon l'une des revendications précédentes, où des absorbeurs de rayonnement (94, 96) qui sont connectés en particulier en contact thermique avec le corps de base (24) s'étendent entre les puces LED (11-15), en particulier entre les puces LED externes (12-15) et la carte de circuit Imprimé (30).

12. Source de rayonnement selon la revendication 11, où les absorbeurs de rayonnement (94, 96) sont à la fois formés thermo-isolant et sont réalisés en particulier en céramique.

13. Source de rayonnement selon l'une des revendications 11 ou 12, où les absorbeurs de rayonnement (94, 96) s'étendent au moins sur toute la largeur des puces LED (11-15) et présentent en particulier une hauteur supérieure à celle des puces LED (11-15), de préférence environ entre 1,5 et 5 fois la hauteur et de manière particulièrement préférée environ deux fois la hauteur des puces LED (11-15).

14. Source de rayonnement selon l'une des revendications précédentes, où un espace fermée (16) s'étend entre les puces LED (11-15), l'écarteur (18) et la lentille de recouvrement (20), qui présente une substance liquide transparente, translucide ou en forme de gel (22), en particulier un gel de silicone ou une masse de scellement.

15. Source de rayonnement selon la revendication 14, où la substance présente des particules de phosphore (22).

16. Source de rayonnement selon l'une des revendications précédentes, où au moins une piste conductrice (31-34) de la carte de circuit imprimé (30) passe sous l'écarteur (18).

17. Source de rayonnement selon l'une des revendications précédentes où la ou les résistances préliminaires (40-43) sont appliquées librement accessibles à l'extérieur de l'écarteur (18) et y sont réglables.

18. Source de rayonnement selon l'une des revendications précédentes où la ou les résistances préliminaires (40-43) sont connectés, en particulier sont soudés, à la carte de circuit imprimé (30) par des surfaces de contact de résistance.

19. Source de rayonnement selon l'une des revendications précédentes, où la ou les résistances préliminaires (40-43) est formée ou sont formées comme piste résistive, dont la largeur à au moins un point, par exemple par découpe laser, est réglable, en particulier peut être réduite.

20. Source de rayonnement selon l'une des revendications précédentes, où la ou les résistances préliminaires (40-43) sont imprimées sur la carte de circuit imprimé (30) ou y sont appliquées par la technologie de couches épaisses et en particulier présente une masse ou une pâte, qui contient des particules conductrices, en particulier en graphite.

21. Source de rayonnement selon l'une des revendications précédentes, où le côté de la lentille de recouvrement (20) tourné vers les puces LED (11-15) est formé essentiellement plate ou convexe ou concave.

22. Source de rayonnement selon une des revendications précédentes où le corps de base (24) est au moins partiellement en cuivre et/ou est au moins partiellement recouvert d'or ou de nickel-or.

23. Source de rayonnement selon l'une des revendications précédentes, où une lentille convexe (56) est disposée dans la trajectoire du faisceau derrière la lentille de recouvrement (20), dont le diamètre est en particulier plus grand que le diamètre de l'objectif de recouvrement (20).

24. Source de rayonnement selon l'une des revendications précédentes où un guide de lumière est disposé après le réflecteur (50, 84) dans la trajectoire du faisceau.

25. Source de rayonnement selon l'une des revendications précédentes où les puces LED (11-15) émettent de la lumière à différentes longueurs d'onde.

26. Source de rayonnement selon l'une des revendications 1 à 24, où les puces LED (11-15) émettent de la lumière avec les mêmes longueurs d'onde.

27. Source de rayonnement selon l'une des revendications 4 à 25 ans, où la carte de circuit imprimé (30) s'étend en particulier dans la zone située entre les branches de la croix.

28. Appareil de photopolymérisation avec au moins une source de rayonnement par semi-conducteurs selon l'une des revendications précédentes en particulier pour le durcissement de masses dentaires photopolymérisables.

29. Appareil de photopolymérisation selon la revendication 28, où il est formé comme outil manuel avec une poignée.

30. Appareil de photopolymérisation selon l'une des revendications 28 ou 29, où l'appareil de photopolymérisation présente un boîtier, sur lequel la lentille convexe (56) est soutenue.
